# EUROPEAN PATENT SPECIFICATION

(11) **EP 3 926 161 B1**
(45) Date of publication and mention of the grant of the patent: **08.10.2025**
(21) Application number: 20382530.2
(22) Date of filing: 19.06.2020
(51) Int. Cl.: F03D 7/02

(54) **REDUCING VIBRATIONS OF PARKED/STANDSTILL WIND TURBINES**
VERRINGERUNG DER VIBRATIONEN VON GEPARKTEN/STILLSTEHENDEN WINDTURBINEN
RÉDUCTION DES VIBRATIONS DES ÉOLIENNES EN STATIONNEMENT/À L'ARRÊT

(43) Date of publication of application: 22.12.2021
(73) Proprietor: Siemens Gamesa Renewable Energy Innovation & Technology S.L., 31621 Sarriguren (Navarra) (ES)
(72) Inventor: KOEHLER, Marc, 27568 Bremerhaven (DE); MEINICKE, Alexander, 27568 Bremerhaven (DE); REITHEL, Jakob, Bremerhaven (DE); FERNANDEZ ROMERO, Ignacio, CP 31012 Pamplona (ES)
(74) Representative: SGRE-Association

(56) References cited:
- EP-A1- 3 663 573
- EP-A2- 2 306 005
- US-A1- 2006 099 075
- US-A1- 2015 252 783

## Description

### Field of invention

The present invention relates to a method for preventing vibrations in wind turbines under standstill conditions. The present invention also relates to a control system for preventing vibrations in a wind turbine in standstill and to a wind turbine equipped with such a control system. Further, the invention relates to a method for upgrading or retrofitting an existing wind turbine.

### Art Background

From the moment a wind turbine is erected until its commissioning and during its operational life, there are many phases where the wind turbine stands still. The reasons for standstill may be many, for instance adverse weather conditions or maintenance of the wind turbine.

The usual procedure at standstill is to position the rotor of the wind turbine such that it faces the prevailing wind direction. At the same time the pitch angle of the rotor blades is set such that the blades are in the "feathered" position, i.e. they do not extract any or at least not a substantial amount of energy from the wind. Additionally, a mechanical braking mechanism may be applied.

Even in case these measures are taken, there still exists the problem of vibrations, which may negatively affect the fatigue life of the wind turbine's support structure and may thus put its structural integrity in danger.

Such vibrations are a commonly known issue in the wind turbine industry. They usually comprise oscillations of the wind turbine tower and/or the rotor blades. As such, it is possible to avoid these vibrations by controlling the orientation of the wind turbine with respect to the wind direction. However, such a strategy requires a working yaw system, which may not be available in case there is no power supply to the wind turbine, such as in a grid outage. Other currently available solutions involve mechanical damping systems, which may take the form of pendulum-based or liquid-based tower dampers and which may already be included in the design of a wind turbine. A disadvantage of such mechanical damping systems is that they are expensive, and ideally need to be included during design of the turbine, since they are very difficult to implement in an existing wind turbine.

EP 2 306 005 A2 relates to a method for reducing vibrations occurring in wind turbines, both under operating conditions and under standstill conditions. The method involves setting the pitch angles of the rotor blades of a wind turbine such that the pitch angles differ by at least 30°.

US 2015/252783 A1 relates to a method of operating a wind turbine wherein the rotor is brought in a stable standstill position suitable for an approach by a helicopter. The method involves adopting rotor blade settings wherein one blade is in an operating position, whereas two other blades are in a parked or feathered position.

The objective of the invention is to provide a simple and effective way of avoiding vibrations in wind turbines under standstill conditions.

### Summary of the Invention

This objective is achieved by the subject-matter according to the independent claims. Advantageous embodiments of the present invention are described by the dependent claims.

According to the invention there is provided a method according to claim 1 for preventing vibrations in a wind turbine under standstill conditions, the wind turbine comprising a wind rotor comprising at least two rotor blades, the method comprising setting the pitch angle of the rotor blades such that the pitch angle of a first rotor blade and the pitch angle of one or more further rotor blades differ by at least 30°.

Due to the large difference between the pitch angles, damping is increased, and vibrations are reduced considerably.

Further according to the invention the first rotor blade is the uppermost rotor blade of the wind rotor under standstill conditions and is the rotor blade that is exposed mostly to the wind. This feature enhances the vibration-damping effect since it ensures that the rotor blade with the substantially deviating pitch angle is always the one that is exposed mostly to the wind.

Further according to the invention the pitch angle of the first rotor blade equals 0° or is close to 0°, in particular within a range of -15° to +15°. This ensures optimum exposure to the prevailing wind, thus supporting the desired vibration-damping effect.

The vibration-damping effect is even more pronounced according to a further aspect of the invention, which comprises setting the pitch angle of the rotor blades such that the pitch angle of the first rotor blade and the pitch angle of the one or more further rotor blades differ by at least 45°, in particular more than 60°.

The vibration-damping effect is increased even more if the first rotor blade extends substantially in the vertical direction, which includes a deviation of -15° to +15° from the vertical direction.

If, according to another aspect of the invention, the pitch angle of the one or more further rotor blades is such that the one or more further rotor blades are in a parked condition, then the vibration-damping effect is even more pronounced.

Advantageously, in the parked condition the pitch angle of the one or more further rotor blades equals 90° or -90° or is close to 90° or -90°, in particular within a range of 75° to 105° or -105° to -75°.

The simplicity of the inventive method is illustrated by a further aspect of the invention, which allows setting the pitch angle of the one or more further rotor blades substantially equal.

According to a further aspect of the invention, the wind rotor comprises three rotor blades. This ensures that none of the rotor blades needs to be positioned in close vicinity to the tower of the wind turbine, a measure which is suitable for further reducing induced vibrations.

Although the method according to the invention is not necessarily restricted to a particular type of wind turbine, it is most advantageously applied to a horizontal axis wind turbine.

A further advantageous aspect comprises maintaining the settings of the pitch angles according to the invention of the rotor blades in case an error is detected by a safety system of the wind turbine. This ensures that vibrations are reduced or avoided over the time it would take to correct the error detected.

According to the invention there is also provided a control system adapted for carrying out the method described in the above, as well as a wind turbine comprising such a control system.

Another advantageous application of the invention is the possibility of upgrading existing wind turbines. The method described in the above constitutes a cost-effective possibility for preventing vibrations in an existing wind turbine in standstill, in case such a wind turbine had not been equipped with mechanical damping systems, or in case these were defective.

Summarising, the advantageous effect of the invention is based on the concept of creating a large difference in exposure to wind between one rotor blade and the further rotor blade or blades of a wind turbine in standstill conditions. Even if wind conditions (especially direction and speed) change during standstill, this difference is maintained to a large extent, still supporting the vibration-damping effect.

It has to be noted that embodiments of the invention have been described with reference to different subject-matters. In particular, some embodiments have been described with reference to apparatus type claims whereas other embodiments have been described with reference to method type claims. However, a person skilled in the art will gather from the above and the following description that, unless indicated otherwise, in addition to any combination of features belonging to one type of subject-matter also any combination between features relating to different subject-matters, in particular between features of the apparatus type claims and features of the method type claims is considered as to be disclosed with this application.

### Brief Description of the Drawings

The aspects defined above and further aspects of the present invention are apparent from the example of embodiment to be described hereinafter and are explained with reference to the example of embodiment. The invention will be described in more detail hereinafter with reference to an example of embodiment but to which the invention is not limited.
Figure 1 shows a schematic front view of a wind turbine under normal operating conditions.
Figure 2 illustrates a typical setting of a positive pitch angle P of the rotor blades of the wind turbine according to Figure 1.
Figure 3 shows a schematic front view of a wind turbine under standstill conditions with the rotor blades in a regularly parked position.
Figures 4 and 5 illustrate a typical setting of a pitch angle P ~ 90° or P ~ -90° of the rotor blades of the wind turbine according to Figure 3 in a parked position.
Figure 6 shows a schematic front view of a wind turbine under standstill conditions with the rotor blades in a parked position according to an exemplary embodiment of the method according to the invention.
Figure 7 illustrates a typical setting of a pitch angle P ~ 0° of one of the rotor blades of the wind turbine according to Figure 6, which, according to the present invention, has a pitch angle differing significantly from the pitch angles of the other rotor blades.

### Detailed Description

The illustrations in the drawings are schematic. It is noted that in different figures, similar or identical elements are provided with the same reference signs.

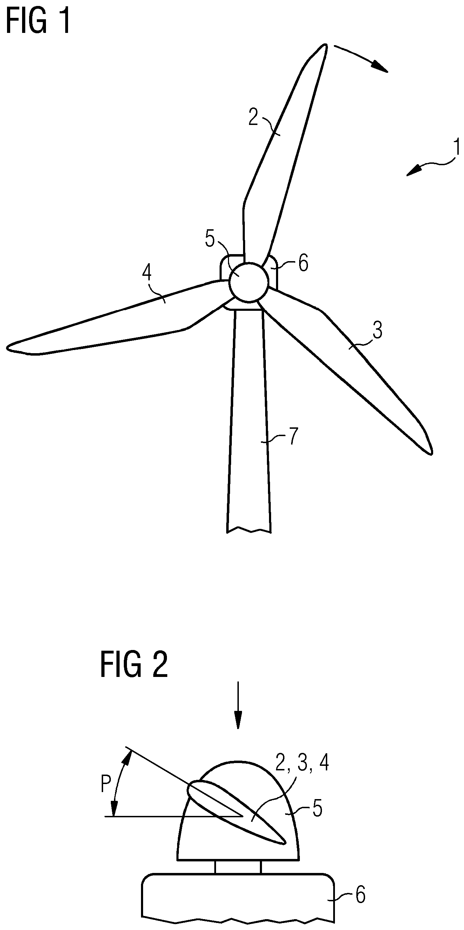

Figure 1 shows a wind turbine 1 under normal operational conditions. The wind turbine 1 comprises three rotor blades 2, 3 and 4 attached to a hub 5 forming a wind rotor mounted to a nacelle 6, and a tower 7. The nacelle 6 is mounted on top of tower 7. Typically, nacelle 6 can be rotated about a vertical axis of tower 7 to enable yawing of the wind turbine, so that the wind rotor may be aligned with the wind direction. In this particular example the wind turbine 1 is a horizontal axis wind turbine. Furthermore, the wind turbine 1 can be of the fixed or floating type.

Integrated in the wind turbine, for instance in the nacelle 6, is a control system which controls various operational parameters, including yawing of the wind turbine and setting the pitch angles of the rotor blades 2, 3 and 4.

Under normal operational conditions the control system, if necessary, would initiate a yawing movement so that the rotor blade plane is orientated substantially perpendicular to the wind direction. It also sets the pitch angles of the rotor blades 2, 3 and 4, such that they are equal or only differ by a few degrees. Figure 2 illustrates a typical setting of a positive pitch angle P of a rotor blade 2, 3 or 4. As a result of the settings made by the control system, a wind as for example indicated by the arrow acts on the blades 2, 3 and 4 of the rotor of the wind turbine 1 such that electrical energy may be generated by the wind turbine 1.

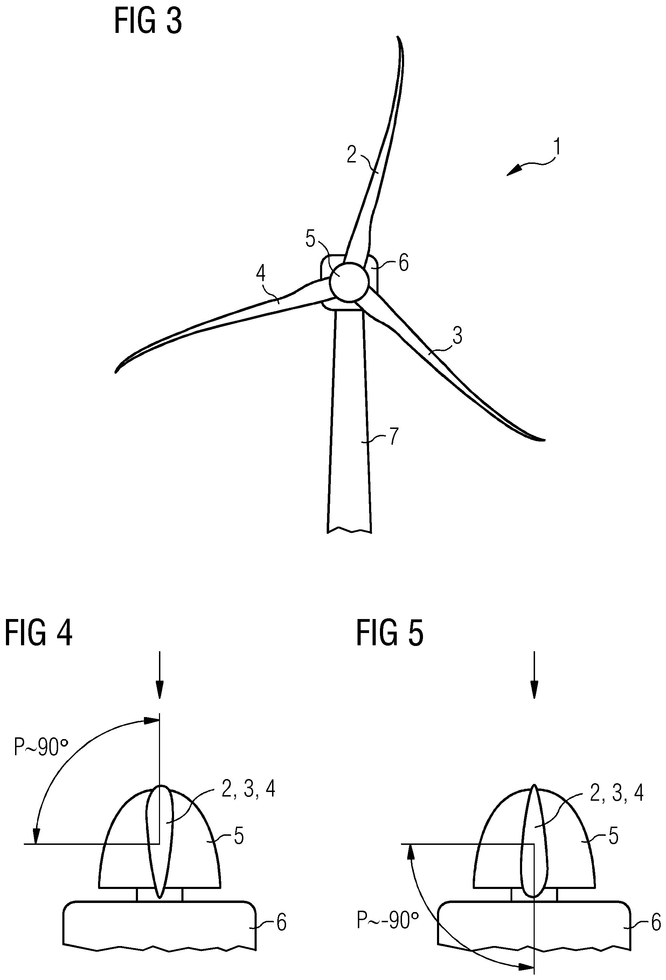

The present invention is mainly concerned with the behaviour of the wind turbine 1 under standstill conditions. As indicated above, there may be many reasons for standstill, i.e. the wind turbine is still being erected, is under maintenance, adverse weather conditions exist, there is a grid outage, etc. Figure 3 shows the wind turbine 1 with the rotor blades in a regularly parked position, where the pitch angle of the rotor blades 2, 3 and 4 is set such that the blades are in the feathered position, i.e. they do not extract any or at least not a significant amount of energy from the wind. Pitch angles P will typically be 90° or close to 90°, as illustrated in Figure 4. During erection of the turbine pitch angles P could be also at -90° or close to - 90°, as illustrated in Figure 5. Additionally, a mechanical braking mechanism may be present in the wind turbine 1.

In case the wind turbine is in the regularly parked position, with the pitch angles of the rotor blades 2, 3 and 4 all substantially equal or differing only by a few degrees, vibrations, with their potentially negative consequences for the functioning of the wind turbine, may still occur. Initiating a yawing movement by the control system in order to orientate the rotor blade plane substantially perpendicular to the wind direction may prove not to be sufficient to avoid vibrations occurring. Moreover, a yawing movement may not be possible due to the absence of a power supply to the wind turbine.

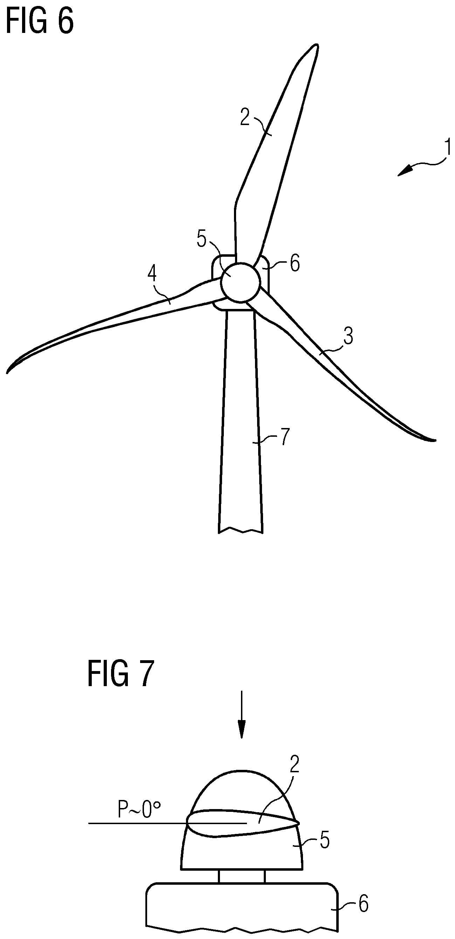

Figure 6 shows a wind turbine 1 under standstill conditions and in a parked position according to an exemplary embodiment of the present invention.

The invention has recognised that damping under standstill conditions is increased if the pitch angle of one rotor blade differs significantly from the pitch angles of the other rotor blade or blades. This difference should be at least 30°, where a difference of 45° or 60° would lead to even better results.

The rotor blade 2 with a pitch angle differing significantly from the pitch angles of the other rotor blades 3 and 4 should be in a position of maximum wind exposure, i.e. with a pitch angle P = 0° or close to 0°, as illustrated in Figure 7, where a range -15° ≤ P ≤ +15° would still lead to the desired result.

The rotor blade 2 with the pitch angle differing significantly from the pitch angles of the other rotor blades 3 and 4 should be the uppermost blade 2 of the wind rotor, as also illustrated in Figure 6, since this would usually be the position of maximum wind exposure. Advantageously, rotor blade 2 extends substantially in the vertical direction, as also shown in Figure 6, where a deviation of -15° to +15° would still lead to the desired result.

The other rotor blades 3 and 4 should preferably be in or close to the parked or feathered position, as also shown in Figure 6. Pitch angles of rotor blades 3 and 4 would thus be P = 90° or P = -90°, or close to 90° or -90°, as already illustrated in Figures 4 and 5, where a range 75° ≤ P ≤ 105° or -105° ≤ P ≤ -75° would still lead to the desired result.

A further advantageous aspect comprises maintaining the settings of the pitch angles according to the invention of the rotor blades even in the case that an error or fault would be detected by a safety/protection system of the wind turbine, such as the so-called "safety chain" being opened for any valid reason. An error alert would also be generated in the case of no power supply to the wind turbine, in particular in the case of no power supply to a pitch angle setting system of the wind turbine, for instance due to depleted batteries or other energy storage of the wind turbine.

In case an error would be detected, it should be avoided that the pitch angle setting system of the rotor blades sets the blades in the parked or feathered position, as would normally be the case under emergency conditions. It is thus an important aspect of the invention that undesired behaviour of the wind turbine's safety/protection system is avoided and that vibrations are still reduced over the time it would take to remedy any deficiencies or correct the error(s) detected.

It will be clear from the foregoing, that the inventive method for preventing vibrations under standstill conditions cannot only be incorporated in the design of new wind turbines. It will also find a cost-effective application in the upgrading and/or repair of existing wind turbines.

Based on the above, it should be noted that the advantageous effects of the invention are based on the concept of creating a large difference in exposure to wind between one rotor blade and the further rotor blade or blades of a wind turbine in standstill conditions. The various aspects of the invention described ensure that, even if wind conditions change during standstill, this difference is maintained to a large extent, still supporting the vibration-damping effect.

It should also be noted that the term "comprising" does not exclude other elements or steps and "a" or "an" does not exclude a plurality. Also, elements described in association with different embodiments may be combined. It should also be noted that reference signs in the claims should not be construed as limiting the scope of the claims.

## Claims

1. Method for preventing vibrations in a wind turbine (1) under standstill conditions, the wind turbine (1) comprising a wind rotor comprising at least two rotor blades (2, 3, 4), the method comprising setting the pitch angle (P) of the rotor blades (2, 3, 4) such that the pitch angle of a first rotor blade (2) and the pitch angle of one or more further rotor blades (3, 4) differ by at least 30°, **characterized in that** under standstill conditions of the wind turbine (1), the first rotor blade (2) is the uppermost rotor blade of the wind rotor, wherein the first rotor blade (2) is the rotor blade that is exposed mostly to the wind and the pitch angle (P) of the first rotor blade (2) equals 0° or is close to 0°, in particular within a range of -15° to +15°, wherein during said standstill conditions wind speed and wind direction relative to the wind rotor can change.

2. The method according to claim 1, further comprising setting the pitch angle of the rotor blades (2, 3, 4) such that the pitch angle of the first rotor blade (2) and the pitch angle of the one or more further rotor blades (3, 4) differ by at least 45°, in particular more than 60°.

3. The method according to claim 1 or claim 2, wherein the first rotor blade (2) extends substantially in the vertical direction, including a deviation of -15° to +15° from the vertical direction.

4. The method according to any of claims 1 to 3, further comprising setting the pitch angle (P) of the one or more further rotor blades (3, 4) such that the one or more further rotor blades (3, 4) are in a parked condition.

5. The method according to claim 4, wherein the pitch angle (P) of the one or more further rotor blades (3, 4) equals 90° or -90° or is close to 90° or -90°, in particular within a range of 75° to 105° or -105° to -75°.

6. The method according to any of claims 1 to 5, further comprising setting the pitch angle (P) of the one or more further rotor blades (3, 4) substantially equal.

7. The method according to any of claims 1 to 6, wherein the wind rotor comprises three rotor blades (2, 3, 4).

8. The method according to any of claims 1 to 7, wherein the wind turbine is a horizontal axis wind turbine (1).

9. The method according to any of claims 1 to 8, further comprising maintaining the settings of the pitch angles (P) of the rotor blades (2, 3, 4) in case an error is detected by a safety system of the wind turbine (1).

10. Control system for preventing vibrations in a wind turbine (1) in standstill, wherein the control system is adapted to carry out the method according to any of claims 1 to 9.

11. Wind turbine (1) comprising a wind rotor comprising at least two rotor blades (2, 3, 4), further comprising a control system according to claim 10.

12. Method for upgrading an existing wind turbine (1) in order to prevent vibrations in the wind turbine under standstill conditions, the wind turbine comprising a wind rotor comprising at least two rotor blades (2, 3, 4), the method comprising providing and implementing a control system according to claim 10.

## Patentansprüche

1. Verfahren zum Verhindern von Schwingungen in einer Windkraftanlage (1) bei Stillstandsbedingungen, wobei die Windkraftanlage (1) einen Windrotor umfasst, der mindestens zwei Rotorblätter (2, 3, 4) umfasst, wobei das Verfahren das Einstellen des Verstellwinkels (P) der Rotorblätter (2, 3, 4), sodass sich der Verstellwinkel eines ersten Rotorblatts (2) und der Verstellwinkel eines weiteren Rotorblatts oder mehrerer weiterer Rotorblätter (3, 4) um mindestens 30° unterscheiden, umfasst, **dadurch gekennzeichnet, dass** bei Stillstandsbedingungen der Windkraftanlage (1) das erste Rotorblatt (2) das oberste Rotorblatt des Windrotors ist, wobei das erste Rotorblatt (2) das Rotorblatt ist, das am meisten Wind ausgesetzt ist, und der Verstellwinkel (P) des ersten Rotorblatts (2) gleich 0° ist oder nahezu 0° beträgt, insbesondere innerhalb eines Bereichs von - 15° bis +15° liegt, wobei sich während der Stillstandbedingungen die Windgeschwindigkeit und Windrichtung in Bezug zum Windrotor ändern können.

2. Verfahren nach Anspruch 1, ferner umfassend das Einstellen des Verstellwinkels der Rotorblätter (2, 3, 4) derart, dass sich der Verstellwinkel des ersten Rotorblatts (2) und der Verstellwinkel des einen weiteren Rotorblatts oder der mehreren weiteren Rotorblätter (3, 4) um mindestens 45°, insbesondere mehr als 60°, unterscheiden.

3. Verfahren nach Anspruch 1 oder Anspruch 2, wobei sich das erste Rotorblatt (2) im Wesentlichen in vertikale Richtung erstreckt, einschließlich einer Abweichung von -15° bis +15° von der vertikalen Richtung.

4. Verfahren nach einem der Ansprüche 1 bis 3, ferner umfassend Einstellen des Verstellwinkels (P) des einen weiteren Rotorblatts oder der mehreren weiteren Rotorblätter (3, 4) derart, dass sich das eine weitere Rotorblatt oder die mehreren weiteren Rotorblätter (3, 4) in einem Parkzustand befinden.

5. Verfahren nach Anspruch 4, wobei der Verstellwinkel (P) des einen weiteren Rotorblatts oder der mehreren weiteren Rotorblätter (3, 4) 90° oder -90° beträgt oder nahezu 90° oder -90° beträgt, insbesondere in einem Bereich von 75° bis 105° oder -105° bis -75° liegt.

6. Verfahren nach einem der Ansprüche 1 bis 5, ferner umfassend Einstellen des Verstellwinkels (P) des einen weiteren Rotorblatts oder der mehreren weiteren Rotorblätter (3, 4) auf einen im Wesentlichen gleichen Wert.

7. Verfahren nach einem der Ansprüche 1 bis 6, wobei der Windrotor drei Rotorblätter (2, 3, 4) umfasst.

8. Verfahren nach einem der Ansprüche 1 bis 7, wobei die Windkraftanlage eine Windkraftanlage (1) mit horizontaler Achse ist.

9. Verfahren nach einem der Ansprüche 1 bis 8, ferner umfassend Halten der Einstellungen der Verstellwinkel (P) der Rotorblätter (2, 3, 4), falls von einem Sicherheitssystem der Windkraftanlage (1) ein Fehler erkannt wird.

10. Steuerungssystem zum Verhindern von Schwingungen in einer Windkraftanlage (1) bei Stillstand, wobei das Steuerungssystem dazu eingerichtet ist, das Verfahren nach einem der Ansprüche 1 bis 9 auszuführen.

11. Windkraftanlage (1), umfassend einen Windrotor, der mindestens zwei Rotorblätter (2, 3, 4) umfasst, ferner umfassend ein Steuerungssystem nach Anspruch 10.

12. Verfahren zum Aufrüsten einer bestehenden Windkraftanlage (1), um Schwingungen in der Windkraftanlage bei Stillstandsbedingungen zu verhindern, wobei die Windkraftanlage einen Windrotor umfasst, der mindestens zwei Rotorblätter (2, 3, 4) umfasst, wobei das Verfahren das Vorsehen und Implementieren eines Steuerungssystems nach Anspruch 10 umfasst.

## Revendications

1. Procédé pour empêcher des vibrations dans une éolienne (1) à l'arrêt, l'éolienne (1) comprenant un rotor éolien comprenant au moins deux pales de rotor (2, 3, 4), le procédé comprenant le paramétrage de l'angle de pas (P) des pales de rotor (2, 3, 4) de sorte que l'angle de pas d'une première pale de rotor (2) et l'angle de pas d'une ou de plusieurs autres pales de rotor (3, 4) diffèrent d'au moins 30°, **caractérisé en ce que** l'éolienne (1) étant à l'arrêt, la première pale de rotor (2) est la pale de rotor supérieure du rotor éolien, dans lequel la première pale de rotor (2) est la pale de rotor qui est principalement exposée au vent et l'angle de pas (P) de la première pale de rotor (2) est égal à 0° ou est proche de 0°, plus particulièrement dans une plage de -15° à +15°, dans lequel pendant lesdites conditions à l'arrêt, la vitesse du vent et le sens du vent par rapport au rotor éolien peuvent changer.

2. Procédé selon la revendication 1, comprenant en outre le paramétrage de l'angle de pas des pales de rotor (2, 3, 4) de telle sorte que l'angle de pas de la première pale de rotor (2) et l'angle de pas de l'une ou de plusieurs autres pales de rotor (3, 4) diffèrent de 45° au moins, plus particulièrement de plus de 60°.

3. Procédé selon la revendication 1 ou la revendication 2, dans lequel la première pale de rotor (2) s'étend essentiellement dans le sens vertical, incluant un écart de -15° à +15° par rapport au sens vertical.

4. Procédé selon l'une quelconque des revendications 1 à 3, comprenant en outre le paramétrage de l'angle de pas (P) d'une ou de plusieurs autres pales de rotor (3, 4) de telle sorte que l'une ou plusieurs autres pales de rotor (3, 4) sont dans un état de stationnement.

5. Procédé selon la revendication 4, dans lequel l'angle de pas (P) d'une ou de plusieurs autres pales de rotor (3, 4) est égal à 90° ou -90° ou est proche de 90° ou -90°, plus particulièrement dans une plage de 75° à 105° ou de -105° à - 75°.

6. Procédé selon l'une quelconque des revendications 1 à 5, comprenant en outre le paramétrage de l'angle de pas (P) d'une ou de plusieurs autres pales de rotor (3, 4) essentiellement égal.

7. Procédé selon l'une quelconque des revendications 1 à 6, dans lequel le rotor éolien comprend trois pales de rotor (2, 3, 4).

8. Procédé selon l'une quelconque des revendications 1 à 7, dans lequel l'éolienne est une éolienne (1) à axe horizontal.

9. Procédé selon l'une quelconque des revendications 1 à 8, comprenant en outre le maintien des paramètres des angles de pas (P) des pales de rotor (2, 3, 4) au cas où une erreur est détectée par un système de sécurité de l'éolienne (1).

10. Système de commande pour empêcher des vibrations dans une éolienne (1) à l'arrêt, dans lequel le système de commande est adapté pour exécuter le procédé selon l'une quelconque des revendications 1 à 9.

11. Éolienne (1) comprenant un rotor éolien comprenant au moins deux pales de rotor (2, 3, 4), comprenant en outre un système de commande selon la revendication 10.

12. Procédé d'amélioration d'une éolienne existante (1) afin d'empêcher des vibrations dans l'éolienne à l'arrêt, l'éolienne comprenant un rotor éolien comprenant au moins deux pales de rotor (2, 3, 4), le procédé comprenant la fourniture et la mise en œuvre d'un système de commande selon la revendication 10.
